# EUROPÄISCHE PATENTSCHRIFT

(11) **EP 3 648 998 B1**
(45) Veröffentlichungstag und Bekanntmachung des Hinweises auf die Patenterteilung: **16.09.2020**
(21) Anmeldenummer: 19701153.9
(22) Anmeldetag: 07.01.2019
(51) Int. Cl.: B60H 1/00

(54) **VERFAHREN ZUM BETREIBEN EINER LÜFTUNGSEINRICHTUNG, LÜFTUNGSEINRICHTUNG, LADEVORRICHTUNG MIT EINER LÜFTUNGSEINRICHTUNG UND KRAFTFAHRZEUG**
METHOD FOR OPERATING A VENTILATION DEVICE, VENTILATION DEVICE, CHARGING DEVICE WITH A VENTILATION DEVICE AND MOTOR VEHICLE
PROCÉDÉ DE FONCTIONNEMENT D'UN DISPOSITIF D'AÉRATION, DISPOSITIF D'AÉRATION, CHARGEUR POURVU D'UN DISPOSITIF D'AÉRATION ET VÉHICULE AUTOMOBILE

(30) Priorität: 18.05.2018 DE 102018207841
(43) Veröffentlichungstag der Anmeldung: 13.05.2020
(73) Patentinhaber: Audi AG, 85045 Ingolstadt (DE)
(72) Erfinder: THIEL, Holger, 85139 Wettstetten (DE)
(86) Internationale Anmeldenummer: PCT/EP2019/050203
(87) Internationale Veröffentlichungsnummer: WO 2019/219246

(56) Entgegenhaltungen:
- US-A1- 2004 069 546
- US-A1- 2007 298 315
- US-A1- 2014 335 771

## Beschreibung

Die Erfindung betrifft ein Verfahren zum Betreiben einer Lüftungseinrichtung zum Bereitstellen eines Luftstroms. Zu der Erfindung gehört auch eine Lüftungseinrichtung, welche nach dem erfindungsgemäßen Verfahren betreibbar ist. Schließlich betrifft die Erfindung auch eine Ladevorrichtung mit einer derartigen Lüftungseinrichtung sowie ein Kraftfahrzeug mit einer Ladevorrichtung.

Aus dem allgemeinen Stand der Technik sind Klimaanlagen für Kraftfahrzeuge bekannt, welche dazu genutzt werden, einen Innenraum des Kraftfahrzeugs zu klimatisieren, um gerade für Fahrzeuginsassen ein gewünschtes Innenraumklima herzustellen.

In Kraftfahrzeugen können neben einer Klimaanlage auch weitere Belüftungseinrichtungen eingesetzt werden.

So ist beispielsweise in der DE 10 2004 030 705 B3 eine Luftversorgungseinrichtung für einen Fahrzeugsitz eines Kraftfahrzeugs beschrieben. Die Luftversorgungseinrichtung umfasst eine Steuereinrichtung zur Ansteuerung eines Gebläses und eines dem Gebläse nachgeschalteten Heizelements. Beim Entriegeln des Fahrzeugs, Öffnen einer Fahrzeugtür und/oder Betätigen eines Verdeckschalters zum Öffnen des Verdecks veranlasst die Steuereinrichtung eine Vorkonditionierung des Heizelements. Beim Vorliegen eines Einschaltsignals für die Luftversorgungseinrichtung beendet die Steuereinrichtung die Vorkonditionierung und schaltet das Heizelement sowie das Gebläse ein. Anschließend werden Heizelement und Gebläse durch die Steuereinrichtung geschwindigkeits- und außentemperaturabhängig geregelt.

Anstelle einer Sitzheizung sind in einem weiteren Verwendungszweck einer Belüftungseinrichtung in der DE 10 2016 216 900 B3 und der DE 10 2015 112 127 A1 Ladevorrichtungen zum Laden eines mobilen Endgeräts mit einer integrierten Lüftung beschrieben. Die integrierte Lüftung dient im Betrieb der Ladevorrichtung zur ausreichenden Kühlung der Ladevorrichtung und des mobilen Endgeräts.

Der Nachteil dieser verschiedenen Belüftungseinrichtungen besteht darin, dass die entsprechenden Lüfter unerwünschte Geräusche erzeugen und aus der Funktion der Lüfter heraus ein zusätzlicher Luftzug entsteht. Sowohl die Geräusche des Lüfters als auch der zusätzliche Luftzug kann für einen Nutzer oder Fahrer oder Fahrzeuginsassen eines Kraftfahrzeugs als störend und unangenehm empfunden werden, wodurch ein Nutzerkomfort erheblich beeinträchtigt werden kann.

Aus der DE 10 2011 119 505 A1 ist eine Gebläseanordnung für ein Kraftfahrzeug bekannt mit einer strömungstechnischen Schnittstelle, wobei die strömungstechnische Schnittstelle an einer Fahrzeugkomponente mit einer Gebläsezuführung angeordnet ist, mit einer strömungstechnischen Gegenschnittstelle, wobei die strömungstechnische Gegenschnittstelle an einem Funktionsmodul angeordnet ist, wobei die strömungstechnische Schnittstelle und die strömungstechnische Gegenschnittstelle in einer Kopplungsposition eine strömungstechnische Verbindung bilden, sodass Gebläseluft von der Gebläsezuführung in das Funktionsmodul geleitet wird, wobei die strömungstechnische Schnittstelle in der Kopplungsposition einen Durchlasszustand einnimmt, wobei ein Durchfluss von Gebläseluft durch die strömungstechnische Schnittstelle möglich ist, wobei die strömungstechnische Schnittstelle in einem Freigabezustand, in dem die strömungstechnische Schnittstelle und die strömungstechnische Gegenschnittstelle voneinander getrennt sind, automatisch und/oder selbsttätig einen Sperrzustand einnimmt, wobei ein Durchfluss von Gebläseluft durch die strömungstechnische Schnittstelle gesperrt ist.

In dem Dokument US 2014/0335771 A1 ist ein Fahrzeug beschrieben, welches eine Energiespeichervorrichtung, ein Luftgebläse und eine Steuervorrichtung aufweist. Das Luftgebläse saugt Luft im Fahrzeuginnenraum an und bläst Kühlluft in den Energiespeicher. Die Steuer-vorrichtung steuert das Luftgebläse so, dass der Kühlluftstrom zum Energiespeicher bei geöffneten Türen des Fahrzeugs im Vergleich zu geschlossenen Türen des Fahrzeugs reduziert ist.

In dem Dokument US 2007/0298315 A1 ist eine Batteriekühlvorrichtung zum Kühlen einer Batterie mit Kühlluft beschrieben, welche von einem Kühlgebläse bereitgestellt wird. Die Batteriekühlvorrichtung umfasst eine Kühlluftdurchflusssteuereinheit, welche dazu eingerichtet ist eine Batterietemperaturänderungsrate zu berechnen, die eine Änderung der Batterietemperatur über eine vorbestimmte Zeit basierend auf der Batterietemperatur anzeigt. Wenn die berechnete Batterietemperaturänderungsrate eine vorbestimmte Unterdrückungssteuerbedingung erfüllt, wird der Kühlluftstrom des Kühlgebläses unterdrückt, unabhängig davon, ob die Batterietemperatur auf oder unter einer Referenztemperatur liegt oder nicht.
Aufgabe der vorliegenden Erfindung ist es, ein Verfahren zum Betreiben einer Lüftungseinrichtung sowie eine Lüftungseinrichtung bereitzustellen, welches beziehungsweise welche besonders störungsarm oder bedarfsgerecht und zugleich besonders einfach, effektiv und zuverlässig, insbesondere hinsichtlich eines Nutzerkomforts, betrieben werden kann.

Diese Aufgabe wird durch ein Verfahren zum Betreiben einer Lüftungseinrichtung sowie durch eine Lüftungseinrichtung mit den Merkmalen der unabhängigen Patentansprüche gelöst. Vorteilhafte Ausgestaltungen mit zweckmäßigen und nicht trivialen Weiterbildungen der Erfindung sind in den abhängigen Patentansprüchen angegeben.

Entsprechend schlägt die Erfindung ein Verfahren zum Betreiben einer Lüftungseinrichtung zum Bereitstellen eines Luftstroms vor, bei welchem zunächst ein Ausstattungsparameterwert eines Ausstattungselements eines Kraftfahrzeugs und ein Fahrzeugparameterwert des Kraftfahrzeugs erfasst werden. Mit "Lüftungseinrichtung" ist insbesondere eine Einrichtung oder Vorrichtung gemeint, welche dazu eingerichtet ist, einen Luftstrom oder einen Luftzug zu erzeugen. Mit "Erfassen" ist insbesondere ein Messen oder ein Bestimmen oder ein Aufnehmen gemeint. Bei dem Ausstattungselement handelt es sich insbesondere um ein technisches und/oder elektronisches Bauteil oder Gerät, welches im Kraftfahrzeug verbaut oder darin angeordnet oder untergebracht ist.

In einem weiteren Verfahrensschritt wird die Lüftungseinrichtung in Abhängigkeit von dem erfassten Ausstattungsparameterwert und dem erfassten Fahrzeugparameterwert aktiviert. Mit "Aktivieren" ist insbesondere ein Einschalten oder ein Einstellen oder ein Ansteuern der Lüftungseinrichtung gemeint. Zum Aktivieren der Lüftungseinrichtung wird dabei eine Drehzahl eines Lüfters der Lüftungseinrichtung eingestellt, wobei die Drehzahl zumindest in Abhängigkeit von dem erfassten Ausstattungsparameterwert und dem erfassten Fahrzeugparameterwert variiert wird. Mit anderen Worten erfolgt eine Lüftersteuerung zumindest in Abhängigkeit von dem erfassten Ausstattungsparameterwert und dem erfassten Fahrzeugparameterwert. Bei dem Lüfter handelt es sich insbesondere um einen Ventilator. Ein Ventilator ist eine fremd angetriebene Strömungsmaschine, die meist mittels eines in einem Gehäuse rotierenden Laufrads ein gasförmiges Dispersionsmedium, beispielsweise Luft, fördert. Die Lüftungseinrichtung kann auch mehr als einen Lüfter aufweisen, welche entsprechend in Abhängigkeit von dem erfassten Ausstattungsparameterwert und dem erfassten Fahrzeugparameterwert eingestellt oder gesteuert werden können.

Durch die Abhängigkeit der Steuerung des Lüfters von dem erfassten Ausstattungsparameterwert und dem erfassten Fahrzeugparameterwert kann die Lüftungseinrichtung nur in Abhängigkeit von gewissen Rahmenbedingungen aktiviert werden. Hierdurch wird der Lüfter gezielter eingesetzt, wodurch die Lüftungseinrichtung besonders geräuscharm, störungsfrei und effizient betrieben werden kann. Durch den gezielten Einsatz der Lüftungseinrichtung können zudem ein Verbrauch und die damit verbundenen Kosten deutlich reduziert werden. Der gezielte Einsatz der Lüftungseinrichtung geht auch mit einem deutlich höheren Nutzerkomfort einher.

Es ist vorgesehen, dass als Ausstattungsparameterwert ein Geräteparameterwert einer mit der Lüftungseinrichtung zu belüftenden Geräteeinrichtung, insbesondere als Ausstattungselement, erfasst wird. Mit anderen Worten kann als Geräteparameterwert ein Wert der Geräteeinrichtung erfasst werden, welche durch den erzeugten Luftstrom der Lüftungseinrichtung angeströmt oder gekühlt wird. Als der Geräteparameterwert wird eine Temperatur, insbesondere an einer Geräteoberfläche zumindest eines Geräts der Geräteeinrichtung, erfasst. Die Temperatur kann beispielsweise durch einen Sensor, insbesondere einen Temperatursensor oder ein Thermometer, erfasst oder gemessen werden.

Der Erfindung liegt die Erkenntnis zugrunde, dass bei einem Ladevorgang vergleichsweise viel Verlustwärme entstehen kann, die zu einer stärkeren Erwärmung der Geräteeinrichtung führen kann. Vor diesem Hintergrund kann es oftmals ausreichend sein, die Aktivierung der Lüftungseinrichtung davon abhängig zu machen, dass ein solcher Ladevorgang im Gange ist. Entsprechend sieht die Erfindung vor, dass als der Geräteparameterwert ein Status der Geräteeinrichtung erfasst wird. Hierbei kann bevorzugt als Status ein Ladevorgang und/oder eine Ladebereitschaft des zumindest einen Geräts der Geräteeinrichtung erfasst oder abgefragt werden.

Durch das Aktivieren der Lüftungseinrichtung in Abhängigkeit von einem Zustand der Geräteeinrichtung, welches durch die Lüftungseinrichtung angeströmt oder gekühlt werden soll, und durch die Erfassung eines vorbestimmten Geräteparameterwertes ergibt sich der Vorteil, dass die Lüftungseinrichtung gezielt auf die Geräteeinrichtung eingestellt und damit besonders effizient und zuverlässig betrieben werden kann.

Die Lüftungseinrichtung kann insbesondere in Abhängigkeit von spezifischen Rahmenbedingungen oder Randbedingungen des Geräts aktiviert werden. So ist es in vorteilhafter Weise vorgesehen, dass die Lüftungseinrichtung bei einer Temperatur, insbesondere an der Geräteoberfläche zumindest eines Geräts der Geräteeinrichtung, von über 30°C, besonders bevorzugt bei einer Temperatur von über 40°C, aktiviert wird. Zusätzlich oder alternativ kann die Lüftungseinrichtung aktiviert werden, wenn als Status ein Ladevorgang und/oder eine Ladebereitschaft des zumindest einen Geräts erfasst wird. Mit "Ladevorgang" ist insbesondere gemeint, dass durch die Erfassungseinrichtung erfasst wird, ob das zumindest eine Gerät geladen wird oder ob das zumindest eine Gerät ein weiteres Gerät lädt oder auflädt, also mit elektrischer Energie versorgt wird oder versorgt. Mit "Ladebereitschaft" ist insbesondere gemeint, dass durch die Erfassungseinrichtung erfasst wird, ob die Geräteeinrichtung bereit ist geladen zu werden oder bereit ist das weitere Gerät zu laden.

Bei dem zumindest einen Gerät der Geräteeinrichtung kann es sich um eine Ladevorrichtung handeln, welche dazu eingerichtet ist, ein weiteres Gerät der Geräteeinrichtung zu laden. Bevorzugt ist die Ladevorrichtung zum drahtlosen Aufladen eines wiederaufladbaren elektrischen Energiespeichers eines mobilen Endgeräts - dem weiteren Gerät - ausgebildet. Beispielsweise kann der Ausstattungsparameterwert einen Wert der Ladevorrichtung, welche dazu eingerichtet ist, das weitere Gerät zu laden oder mit elektrischer Energie zu versorgen, umfassen. Alternativ kann es sich bei dem zumindest einen Gerät auch um das mobile Endgerät handeln, welches durch die Ladvorrichtung, geladen wird. Die Geräteeinrichtung kann also die Ladevorrichtung und/oder das mobile Endgerät, insbesondere in Abhängigkeit deren Geräteparameterwertes die Lüftungseinrichtung gesteuert wird, umfassen. Erst bei einer Temperatur von mindestens 30°C und/oder einem vorbestimmten Gerätestatus ist die Bereitstellung des Luftstroms notwendig. Hierdurch kann die Lüftungseinrichtung besonders effektiv und zuverlässig betrieben werden.

Gemäß einer vorteilhaften Weiterbildung ist es vorgesehen, dass der Fahrzeugparameterwert einen Innenraumparameterwert in einem Innenraum des Kraftfahrzeugs umfasst. Mit anderen Worten kann ein Zustand in dem Innenraum des Kraftfahrzeugs oder der Fahrzeugkabine erfasst werden. Als Innenraumparameterwert kann bevorzugt eine Innenraumtemperatur und/oder ein Geräuschpegel erfasst werden. Mit "Geräuschpegel" ist insbesondere ein Schalldruckpegel oder ein Wert eines Störgeräuschs oder eine Lautstärke in dem Innenraum des Kraftfahrzeugs gemeint. Die Innenraumtemperatur und/oder der Geräuschpegel können durch eine Erfassungseinrichtung erfasst werden. Zum Erfassen der Innenraumtemperatur kann die Erfassungseinrichtung beispielsweise einen Sensor, insbesondere einen Temperatursensor oder ein Thermometer, aufweisen. Zum Erfassen des Geräuschpegels kann die Erfassungseinrichtung bevorzugt ein oder mehrere Mikrofone aufweisen. Insbesondere kann der Lüfter aktiviert werden, wenn die Innenraumtemperatur und/oder der Geräuschpegel einen vorbestimmten Schwellwert oder Grenzwert erreicht. Der Schwellwert der Innenraumtemperatur und/oder der Schwellwert des Geräuschpegels können einem Speicher einer Steuereinrichtung hinterlegt sein, welche den Lüfter ansteuert oder einstellt. Beispielsweise kann der Schwellwert der Temperatur einen Wert zwischen 20°C und 40°C aufweisen. Der Schwellwert des Geräuschpegels kann zum Beispiel zwischen 30 dB und 65 dB, besonders bevorzugt 40 dB, betragen.

Eine weitere vorteilhafte Ausführungsform sieht vor, dass der Fahrzeugparameterwert ferner eine Geschwindigkeit des Kraftfahrzeugs umfasst, welche als Fahrzeugparameterwert erfasst wird. Hierbei kann der Lüfter geschwindigkeitsabhängig, also in Abhängigkeit von einer Geschwindigkeit des Kraftfahrzeugs, gesteuert oder geregelt werden. Insbesondere kann der Lüfter aktiviert werden, wenn die Geschwindigkeit einen vorbestimmten Schwellwert oder Grenzwert erreicht. Der Schwellwert der Geschwindigkeit kann ebenfalls dem Speicher der Steuereinrichtung hinterlegt sein, welche den Lüfter ansteuert oder einstellt. In vorteilhafter Weise wird die Lüftungseinrichtung ab einer Geschwindigkeit des Kraftfahrzeugs von 5 km/h, insbesondere bei einer Geschwindigkeit zwischen 5 km/h und 30 km/h, besonders bevorzugt ab einer Geschwindigkeit von 30 km/h, aktiviert. Der Erfindung liegt zudem die Erkenntnis zugrunde, dass mit zunehmender Fahrzeuggeschwindigkeit, also Geschwindigkeit des Kraftfahrzeugs, der Geräuschpegel im Innenraum des Kraftfahrzeugs zunimmt. Entsprechend sieht hierbei eine besonders bevorzugte Ausführungsform vor, dass die Drehzahl des Lüfters mit zunehmender Geschwindigkeit des Kraftzeugs zunimmt oder steigt oder angehoben wird. Zusätzlich oder alternativ kann es vorgesehen sein, dass die Ansteuerung der Lüftungseinrichtung derart in Abhängigkeit dem Geräuschpegel, insbesondere in einem Umfeld der Lüftungseinrichtung, erfolgt, dass der Lüfter mit umso größere Leistung betrieben werden kann, je höher der Geräuschpegel ist. Hierdurch kann der Lüfter betrieben werden, ohne dass die Lüftergeräusche zu dem Geräuschpegel im Innenraum des Kraftfahrzeugs beitragen und damit durch die Lüftungseinrichtung eine besonders gute und ausreichende Belüftung und Kühlung bereitgestellt werden.

Eine vorteilhafte Weiterbildung sieht vor, dass in Abhängigkeit von dem erfassten Ausstattungsparameterwert und dem Fahrzeugparameterwert die Drehzahl des Lüfters der Lüftungseinrichtung zwischen 10 % und 100 %, insbesondere der maximalen Drehzahl des Lüfters, insbesondere zwischen 30 % und 100 %, besonders bevorzugt mit 30 % oder 60 % oder 100 %, eingestellt wird. Besonders bevorzugt kann die Drehzahl des Lüfters, also die Lüfterdrehzahl, stufenweise in Abhängigkeit von dem erfassten Ausstattungsparameterwert und dem Fahrzeugparameterwert eingestellt oder geregelt werden. Durch die prozentuale oder stufenweise Einstellung der Lüfterdrehzahl kann die Lüftungseinrichtung besonders genau und bedarfsgerecht eingestellt werden.

In vorteilhafter Weise wird zusätzlich zu dem Ausstattungsparameterwert und dem Fahrzeugparameterwert eine Einstellung einer Klimaanlage des Kraftfahrzeugs erfasst, wobei die Drehzahl des Lüfters in Abhängigkeit von dem erfassten Ausstattungsparameterwert, dem erfassten Fahrzeugparameterwert und der erfassten Einstellung der Klimaanlage variiert wird. Bei der Erfassung der Einstellung der Klimaanlage kann beispielsweise überprüft werden, ob die Klimaanlage eingeschaltet oder ausgeschaltet oder ob eine vorbestimmte Gebläsestärke der Klimaanlage eingestellt ist. Zum Beispiel kann der Lüfter aktiviert werden, wenn das Kraftfahrzeug steht, also eine Geschwindigkeit des Kraftfahrzeugs von 0 km/h erfasst wird, aber die Klimaanlage mit einer Gebläsestufe oder Gebläsestärke auf 6 von 12 eingestellt ist.

Eine weitere vorteilhafte Ausführungsform sieht vor, dass die Lüftungseinrichtung wieder deaktiviert wird, wenn der Ausstattungsparameterwert und/oder der Fahrzeugparameterwert wieder einen vorbestimmten Schwellwert unterschreitet. Mit anderen Worten sollte zumindest der Ausstattungsparameterwert oder der Fahrzeugparameterwert einen unteren Schwellwert oder Grenzwert oder Minimalwert erreichen, so wird der Lüfter der Lüftungseinrichtung derart angesteuert, dass der Lüfter ausgeschaltet wird, also insbesondere kein Luftstrom mehr bereitgestellt wird. Dabei kann die Lüftungseinrichtung so lange deaktiviert bleiben, bis der vorbestimmte Schwellwert des Ausstattungsparameterwerts und/oder des Fahrzeugparameterwerts wieder erreicht oder überschritten wird, insbesondere in Abhängigkeit dessen die Lüftungseinrichtung aktiviert wird.

Zu der Erfindung gehört auch eine Lüftungseinrichtung zum Bereitstellen eines Luftstroms. Die Lüftungseinrichtung umfasst einen Lüfter, welcher dazu eingerichtet ist, einen Luftstrom zu erzeugen. Ferner weist die Lüftungseinrichtung eine Erfassungseinrichtung auf, welche dazu eingerichtet ist, zumindest einen Ausstattungsparameterwert eines Ausstattungselements eines Kraftfahrzeugs und einen Fahrzeugparameterwert des Kraftfahrzeugs zu erfassen. Des Weiteren umfasst die Lüftungseinrichtung eine Steuereinrichtung, welche dazu eingerichtet ist, die Lüftungseinrichtung in Abhängigkeit von zumindest dem erfassten Ausstattungsparameterwert und dem erfassten Fahrzeugparameterwert zu aktivieren. Ferner ist die Steuereinrichtung dazu eingerichtet, zum Aktivieren der Lüftungseinrichtung eine Drehzahl des Lüfters einzustellen, wobei die Steuereinrichtung die Drehzahl in Abhängigkeit von dem erfassten Ausstattungsparameterwert und dem erfassten Fahrzeugparameterwert variiert oder einstellt.

Ferner gehört zu der Erfindung auch eine Ladevorrichtung, insbesondere als Ausstattungselement, zum drahtlosen Aufladen eines wiederaufladbaren elektrischen Energiespeichers eines Geräts, insbesondere eines mobilen Endgeräts, mit einer derartigen Lüftungseinrichtung.

Schließlich betrifft die Erfindung auch ein Kraftfahrzeug mit einer solchen Ladevorrichtung. Das Kraftfahrzeug ist bevorzugt als Kraftwagen, insbesondere als Personenkraftwagen, ausgebildet.

Zu der Erfindung gehören auch Weiterbildungen der erfindungsgemäßen Lüftungseinrichtung, der erfindungsgemäßen Ladevorrichtung und des erfindungsgemäßen Kraftfahrzeugs die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Lüftungseinrichtung, der erfindungsgemäßen Ladevorrichtung und des erfindungsgemäßen Kraftfahrzeugs hier nicht noch einmal beschrieben. Die Erfindung ist durch die unabhängigen Ansprüche definiert. Vorteilhafte Ausgestaltungen ergeben sich durch die abhängigen Ansprüche.

Im Folgenden sind Ausführungsbeispiele der Erfindung beschrieben. Hierzu zeigt:
- Fig. 1: eine schematische Darstellung einer Lüftungseinrichtung für ein Kraftfahrzeug;
- Fig. 2: eine schematische Darstellung der Lüftungseinrichtung in einer Ausführungsform einer Ladevorrichtung für ein mobiles Endgerät; und
- Fig. 3: eine schematische Darstellung der Lüftungseinrichtung in einer weiteren Ausführungsform einer Ladevorrichtung für ein mobiles Endgerät.

In den Figuren bezeichnen gleiche Bezugszeichen jeweils funktionsgleiche Elemente.

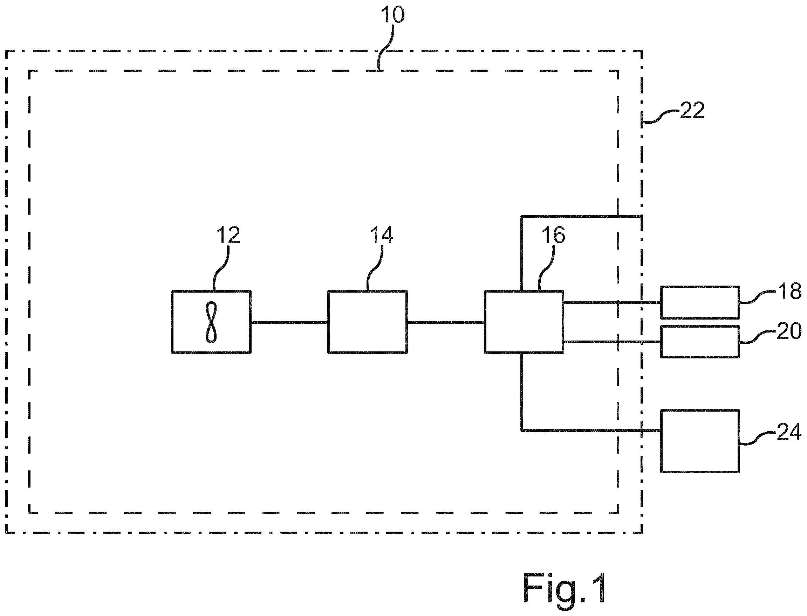

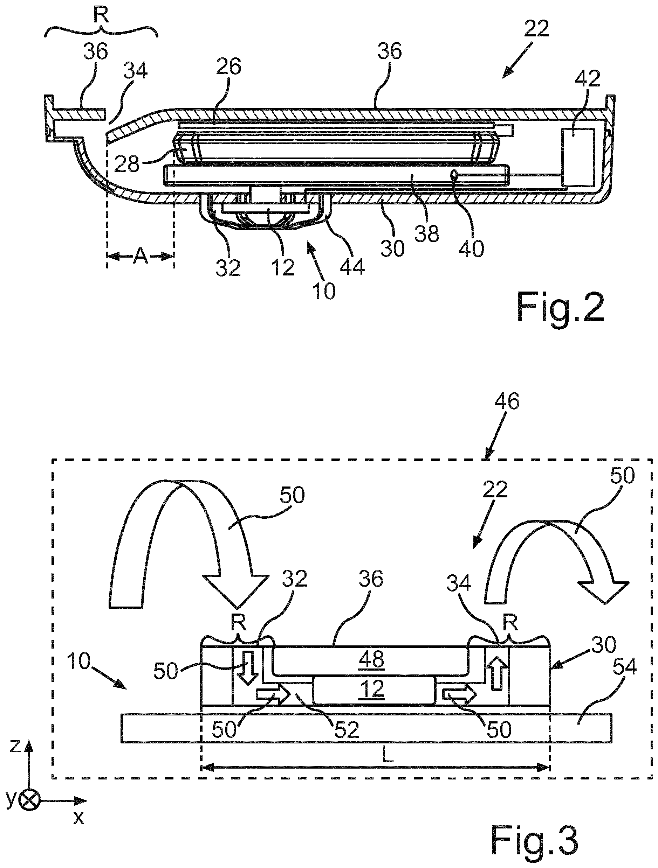

Fig. 1 zeigt in einer schematischen Darstellung eine Lüftungseinrichtung 10. Die Lüftungseinrichtung 10 kann Teil einer Ladevorrichtung 22 zum drahtlosen Aufladen eines wiederaufladbaren elektrischen Energiespeichers eines Geräts, welche in Fig. 2 und Fig. 3 näher erläutert wird, sein. Die Lüftungseinrichtung 10 oder die Ladevorrichtung 22 mit der Lüftungseinrichtung 10 kann in einem Kraftfahrzeug (in Fig. 1 nicht gezeigt) angeordnet sein. Beispielsweise kann die Ladevorrichtung 22 an einer Mittelkonsole des Kraftfahrzeugs angeordnet oder in dieser integriert sein.

Die Lüftungseinrichtung 10 weist einen Lüfter 12, eine Steuereinrichtung 14 und eine Erfassungseinrichtung 16 auf. Die Erfassungseinrichtung 16 ist dazu eingerichtet, einen Fahrzeugparameterwert und einen Ausstattungsparameterwert und/oder eine Einstellung einer Klimaanlage 24 des Kraftfahrzeugs zu erfassen. Als Fahrzeugparameterwert kann beispielsweise ein Innenraumparameterwert des Kraftfahrzeugs erfasst werden. Der Innenraumparameterwert kann hierbei eine Innenraumtemperatur und/oder einen Geräuschpegel in einem Innenraum 18 des Kraftfahrzeugs, insbesondere einer Fahrzeugkabine des Kraftfahrzeugs, umfassen. Zum Erfassen der Innenraumtemperatur kann die Erfassungseinrichtung 16 beispielsweise einen Temperatursensor aufweisen. Zum Erfassen des Geräuschpegels in dem Innenraum 18 des Kraftfahrzeugs kann die Erfassungseinrichtung 16 beispielsweise ein Mikrofon aufweisen. Zusätzlich oder alternativ kann der Fahrzeugparameterwert eine Geschwindigkeit des Kraftfahrzeugs umfassen, welche durch die Erfassungseinrichtung 16 erfassbar ist.

Der Ausstattungsparameterwert kann einen Geräteparameterwert eines Geräts 20 einer Geräteeinrichtung, welches durch den Lüfter 12 der Lüftungseinrichtung 10 belüftet oder gekühlt wird, umfassen. Der Geräteparameterwert kann beispielsweise eine Temperatur, insbesondere an einer Oberfläche des Geräts 20, und/oder einen Gerätestatus des Geräts 20 umfassen. Die Temperatur kann durch einen weiteren Temperatursensor der Erfassungseinrichtung 16 erfasst werden. Der Gerätestatus des Geräts 20 kann beispielsweise durch eine Steuereinrichtung des Geräts 20 erfasst und an die Erfassungseinrichtung 16 übermittelt oder gesendet werden. Als Gerätestatus kann ein Ladevorgang und/oder eine Ladebereitschaft des Geräts 20 erfasst werden. Bei dem Gerät kann es sich beispielsweise um ein portables mobiles Endgerät, wie beispielsweise um ein Smartphone oder um einen Tablet-Computer, handeln. Das mobile Endgerät kann durch die Ladevorrichtung 22 geladen werden.

Zusätzlich oder alternativ kann der Ausstattungsparameterwert einen Wert der Ladevorrichtung 22 der Geräteeinrichtung, welche dazu eingerichtet ist, das Gerät 20 zu laden oder mit elektrischer Energie zu versorgen, umfassen. Hierbei kann der Wert der Ladevorrichtung 22 beispielsweise eine Temperatur, insbesondere an einer Oberfläche der Ladevorrichtung 22, oder ein Status der Ladevorrichtung 22 umfassen. Als Status kann ein Ladevorgang und/oder eine Ladebereitschaft der Ladevorrichtung 22 erfasst werden.

Zum Erfassen der Einstellung der Klimaanlage 24 des Kraftfahrzeugs kann die Erfassungseinrichtung 16 beispielsweise erfassen, ob die Klimaanlage 24 eingeschaltet oder ausgeschaltet oder eine vorbestimmte Gebläsestärke aufweist. Hierzu kann die Klimaanlage 22 eine Steuereinrichtung aufweisen, welche dazu eingerichtet ist, die Einstellung der Klimaanlage 24 an die Erfassungseinrichtung 16 zu übermitteln oder zusenden.

Die Steuereinrichtung 14 der Lüftungseinrichtung 10 ist dazu eingerichtet, den Lüfter 12 zumindest in Abhängigkeit von dem erfassten Ausstattungsparameterwert und dem Fahrzeugparameterwert anzusteuern. Der Lüfter 12 ist dazu eingerichtet, einen Luftstrom bereitzustellen. Der Luftstrom wird durch den Lüfter 12 bereitgestellt, sobald der Lüfter 12 durch die Steuereinrichtung 14 angesteuert oder aktiviert wird.

Die Steuereinrichtung 14 ist hierbei dazu eingerichtet, zumindest in Abhängigkeit von dem erfassten Ausstattungsparameterwert und dem Fahrzeugparameterwert eine Drehzahl des Lüfters 12 einzustellen oder zu regulieren.

Im Folgenden sollen verschiedene Einstellungsformen der Lüftungseinrichtung 10 näher erläutert werden:
Als Ausstattungsparameterwert wird ein Status der Ladevorrichtung 22 vorgegeben. Hierbei kann als Status die Ladebereitschaft, also ob die Ladevorrichtung 22 ladebereit ist, und/oder die Ladevorrichtung 22 aktiv ist, vorgegeben sein. Ferner wird als Ausstattungsparameterwert die Temperatur an einer Oberfläche der Ladevorrichtung 22, insbesondere an der Oberfläche, an der das zu ladende Gerät 20, besonders bevorzugt das portable mobile Endgerät, anliegt oder aufliegt, vorgegeben. Als Temperatur wird eine Temperatur an der Oberfläche von größer als 40°C erfasst. Als Fahrzeugparameterwert wird die Fahrzeuggeschwindigkeit erfasst. Bei den Fahrzeuggeschwindigkeiten wird unterschieden zwischen einer Fahrzeuggeschwindigkeit von 0 bis 5 km/h, einer Fahrzeuggeschwindigkeit von 5 bis 30 km/h und einer Fahrzeuggeschwindigkeit von mehr als 30 km/h. In Abhängigkeit von diesen Ausstattungsparameterwerten und Fahrzeugparameterwerten wird die Drehzahl des Lüfters 12 eingestellt. Dabei wird die Drehzahl des Lüfters 12 mit einer Lüfterdrehzahl von 30 %, 60 % oder 100 % eingestellt.

In einer Einstellungsform wird der Lüfter 12 nicht aktiviert, wenn die Ladevorrichtung nicht ladebereit und nicht aktiv ist, die Temperatur der Oberfläche nicht über 40 °C und die Fahrzeuggeschwindigkeit unter 5 km/h. In einer weiteren Einstellungsform wird der Lüfter 12 nicht aktiviert, wenn die Ladevorrichtung 22 ladebereit ist, die Fahrzeuggeschwindigkeit bei 0 bis 5 km/h liegt, die Ladevorrichtung nicht aktiv ist und die Temperatur der Oberfläche nicht über 40 °C liegt. In einer weiteren Einstellungsform wird der Lüfter 12 mit einer Lüfterdrehzahl von 30 % aktiviert, wenn die Ladevorrichtung 22 ladebereit und aktiv ist, die Fahrzeuggeschwindigkeit bei 0 bis 5 km/h und die Temperatur der Oberfläche nicht über 40 °C liegt. In einer weiteren Einstellungsform wird der Lüfter 12 mit einer Lüfterdrehzahl von 30 % aktiviert, wenn die Ladevorrichtung 22 ladebereit ist, die Ladevorrichtung 22 nicht aktiv ist, die Temperatur der Oberfläche über 40 °C und die Fahrzeuggeschwindigkeit bei 0 bis 5 km/h liegt. In einer weiteren Einstellungsform wird der Lüfter 12 mit einer Lüfterdrehzahl von 100 % aktiviert, wenn die Ladevorrichtung 22 ladebereit und aktiv ist, die Temperatur der Oberfläche über 40 °C und die Fahrzeuggeschwindigkeit bei 0 bis 5 km/h liegt. In einer weiteren Einstellungsform wird der Lüfter 12 nicht aktiviert, wenn die Ladevorrichtung 22 ladebereit ist, nicht aktiv ist, die Temperatur der Oberfläche nicht über 40 °C liegt und die Fahrzeuggeschwindigkeit 5 bis 30 km/h beträgt. In einer weiteren Einstellungsform wird der Lüfter 12 mit einer Lüfterdrehzahl von 60 % aktiviert, wenn die Ladevorrichtung 22 ladebereit und aktiv ist, die Temperatur der Oberfläche nicht über 40 °C liegt und die Fahrzeuggeschwindigkeit bei 5 bis 30 km/h liegt. In einer weiteren Einstellungsform wird der Lüfter 12 mit einer Lüfterdrehzahl von 60 % aktiviert, wenn die Ladevorrichtung 22 ladebereit aber nicht aktiv ist, die Temperatur der Oberfläche über 40 °C und die Fahrzeuggeschwindigkeit bei 5 bis 30 km/h liegt. In einer weiteren Einstellungsform wird der Lüfter 12 mit einer Lüfterdrehzahl von 100 % aktiviert, wenn die Ladevorrichtung 22 ladebereit und aktiv ist, die Temperatur der Oberfläche über 40 °C und die Fahrzeuggeschwindigkeit bei 5 bis 30 km/h liegt. In einer weiteren Einstellungsform wird der Lüfter 12 nicht aktiviert, wenn die Ladevorrichtung ladebereit, aber nicht aktiv ist, die Temperatur der Oberfläche nicht über 40 °C und die Fahrzeuggeschwindigkeit bei über 30 km/h liegt. In einer weiteren Einstellungsform wird der Lüfter 12 mit einer Lüfterdrehzahl von 100 % aktiviert, wenn die Ladevorrichtung 22 ladebereit und aktiv ist, die Temperatur der Oberfläche nicht über 40 °C und die Fahrzeuggeschwindigkeit bei über 30 km/h liegt. In einer weiteren Einstellungsform wird der Lüfter 12 mit einer Lüfterdrehzahl von 100 % aktiviert, wenn die Ladevorrichtung 22 ladebereit aber nicht aktiv ist, die Temperatur der Oberfläche über 40 °C und die Fahrzeuggeschwindigkeit bei über 30 km/h liegt. In einer weiteren Einstellungsform wird der Lüfter 12 mit einer Lüfterdrehzahl von 100 % aktiviert, wenn die Ladevorrichtung 22 ladebereit und aktiv ist, die Temperatur der Oberfläche über 40 °C und die Fahrzeuggeschwindigkeit bei über 30 km/h liegt.

Als zusätzliche Größe kann noch die Einstellung der Klimaanlage 24 berücksichtigt werden. So kann es beispielsweise vorgesehen sein, dass der Lüfter 12 aktiviert wird, wenn das Kraftfahrzeug steht, also eine Fahrzeuggeschwindigkeit von 0 km/h aufweist, aber die Klimaanlage eingeschaltet ist, zum Beispiel auf 6 von 12 steht. Auch weitere Rahmenbedingungen zum Aktivieren des Lüfters 12 und/oder Einstellen der Lüfterdrehzahl sind denkbar.

In Fig. 2 und Fig. 3 ist jeweils eine Ausführungsform der Ladevorrichtung 22 mit einer Lüftungseinrichtung 10 gezeigt.

Fig. 2 zeigt beispielhaft eine Ausführungsform der Ladevorrichtung 22 gemäß der vorliegenden Erfindung. Die Ladevorrichtung 22 weist eine Primärspuleneinrichtung 26 und eine damit operativ verbundene erste Steuereinrichtung 28 wenigstens zum Steuern der Stärke und Dauer des durch die Primärspuleneinrichtung 26 erzeugbaren Wechselmagnetfelds auf. Die erste Steuereinrichtung 28 ist in einem Gehäuse 30 angeordnet. Bei der ersten Steuereinrichtung 28 kann es sich um die bereits in Zusammenhang mit Fig. 1 beschriebene Steuereinrichtung 14 oder um eine weitere Steuereinrichtung der Ladevorrichtung 22 handeln. Das Gehäuse 30 weist eine Unterschalte und einen Deckel oder eine Oberschale auf, der oder die mit der Unterschale verbunden oder verbindbar ist. Die Unterschale weist wenigstens eine Lufteintrittsöffnung 32 und der Deckel wenigstens eine Luftaustrittsöffnung 34, insbesondere der Lüftungseinrichtung 10, auf. Ferner weist der Deckel eine Außenseite auf, wobei die Außenseite zumindest teilweise als Auflagefläche 36 für das Gerät 20, insbesondere das mobile Endgerät, dient.

Ferner weist die Ladevorrichtung 22 einen Kühlkörper 38 auf, der in dem Gehäuse 30 angeordnet ist. Kühlkörper sind aus dem Stand der Technik hinlänglich bekannt und bestehen, ebenso wie der erfindungsgemäß verwendete Kühlkörper 38, aus einem hierfür geeigneten Metall, wie zum Beispiel Aluminium oder Kupfer oder Gusseisen. Des Weiteren kann der Kühlkörper 38 Kühlrippen und/oder Kühlflossen und/oder Kühlstifte aufweisen. Bevorzugt sind die Kühlrippen und/oder Kühlflossen und/oder Kühlstifte in einem Einbauzustand des Kühlkörpers 38 auf einer der ersten Steuereinrichtung 28 abgewandten Seite des Kühlkörpers 38 angeordnet. Auch kann die Ladevorrichtung 22 mehr als einen Kühlkörper 38 aufweisen.

Der Kühlkörper 38 ist in bevorzugter Weise benachbart zur ersten Steuereinrichtung 28, besonders bevorzugt unmittelbar benachbart zur ersten Steuereinrichtung 28 angeordnet, wobei zwischen Kühlkörper 38 und erster Steuereinrichtung 28 auch ein oder mehrere Wärmeleitelemente, wie zum Beispiel Wärmeleitpads, angeordnet sein können. Alternativ kann der Kühlkörper 38 auch zwischen der Primärspulenanordnung 26 und der ersten Steuereinrichtung 28 angeordnet sein.

Des Weiteren umfasst die Ladevorrichtung 22 die Lüftungseinrichtung 10, welche den Lüfter 12, welcher auch als, insbesondere aktive, Luftzufuhreinrichtung bezeichnet werden kann, umfasst. Der Lüfter 12 kann als Axiallüfter oder als Radiallüfter oder als Tangentiallüfter oder als synthetischer Jet ausgebildet sein. Es kann vorgesehen sein, dass der Lüfter 12 an dem Kühlkörper 38 angeordnet oder befestigt ist. Der Lüfter 12 ist dazu eingerichtet, dem Kühlkörper 38 einen Luftstrom zu erzeugen. Dabei kann durch den Lüfter 12 der Lüftungseinrichtung 10 durch die wenigstens eine Lufteintrittsöffnung 32 Umgebungsluft zugeführt werden. Durch das für die Ladevorrichtung 22 vorgesehene Gehäuse 30 kann zumindest ein Teil der durch den Lüfter 12 angesaugten Luft durch die zumindest eine Luftaustrittsöffnung 34 wieder austreten.

Wie in Fig. 2 dargestellt ist, ist der Lüfter 12 in bevorzugter Weise in der wenigstens einen Lufteintrittsöffnung 32 des Gehäuses 30 angeordnet, wobei mit "in" hier auch fluchtend zumindest teilweise "vor" oder "hinter" der Lufteintrittsöffnung 32 zu verstehen ist. Hierdurch kann sichergestellt werden, dass zumindest ganz überwiegend nur Umgebungsluft von außerhalb des Gehäuses 30 angesaugt und in das Gehäuse 30, insbesondere zu dem Kühlkörper 38, geleitet wird.

Der Lüfter 12 der Lüftungseinrichtung 10 der Ladevorrichtung 22 kann unter den in Zusammenhang mit Fig. 1 erläuterten Randbedingungen aktiviert werden. Zusätzlich kann es vorgesehen sein, dass der Lüfter 12 auch dann aktiviert wird, sofern und solange eine vorgebbare erste Grenztemperatur des Kühlkörpers 38 erreicht oder überschritten ist. Um dies zu ermöglichen, ist dem Kühlkörper 38 eine eine Temperatursensoreinrichtung 40 zur Erfassung der Temperatur des Kühlkörpers 38 zugeordnet. Zudem kann die Ladevorrichtung 22 hierzu eine zweite Steuereinrichtung 42 aufweisen, die in Signalverbindung mit der Temperatursensoreinrichtung 40 steht sowie operativ mit dem der Lüftungseinrichtung 10, insbesondere dem Lüfter 12, gekoppelt ist. Die zweite Steuereinrichtung 42 ist gemäß dieser Ausführungsform dazu eingerichtet, den Lüfter 12 zu aktivieren, sobald und solange eine vorgebbare erste Grenztemperatur des Kühlkörpers 38 erreicht oder überschritten ist. Als erste Grenztemperatur kann zum Beispiel eine Temperatur von 40°C, 41°C, 42°C, 43°C, 44°C oder 45°C vorgegeben sein.

Bei der Ladevorrichtung 22 ist die wenigstens eine Luftaustrittsöffnung 34 in vorteilhafter Weise in einem vorgebbaren Randbereich R der Seite des Gehäuses 30 angeordnet, deren Außenseite zumindest teilweise als Auflagefläche 36 für das mobile Endgerät dient, derart, dass die wenigstens eine Luftaustrittsöffnung 34 in einem Einbauzustand des Gehäuses 30 um einen vorgebbaren Abstandswert A horizontal gegenüber dem der wenigstens einen Luftaustrittsöffnung 34 nächstkommenden Teil der ersten Steuereinrichtung 28 versetzt ist.

Bei der Ladevorrichtung 22 gemäß der vorliegenden Erfindung kann die wenigstens eine Luftaustrittsöffnung 34 derart ausgebildet sein, dass die Strömungsrichtung der durch sie austretenden Luft einen spitzen Winkel gegenüber der Auflagefläche 36 aufweist. Dieser spitze Winkel ist nicht besonders beschränkt, beträgt jedoch in bevorzugter Weise im Bereich von 0°, insbesondere der Strömungsrichtung der austretenden Luft parallel zur Oberfläche der Auflagefläche 36, und etwa 30°.

Auf besonders sichere Art und Weise kann eine "Hinterlüftung" eines auf der Auflagefläche 36 der Ladevorrichtung 22 liegenden Geräts 20 erreicht werden, wenn, wie dies gemäß einer weiteren vorteilhaften Weiterbildung der Erfindung vorgesehen ist, die Auflagefläche 36 Abstandselemente aufweist, durch die zwischen der Auflagefläche 36 und einer Auflageseite des mobilen Endgeräts ein vorgebbarer Abstand gewährleistet ist. Die Abstandselemente sind bevorzugt derart auf der Auflagefläche 36 angeordnet, dass durch sie ein möglichst großflächig verteilter Luftstrom unterhalb eines auf den Abstandselementen aufliegenden mobilen Endgeräts erreicht wird.

Wie in Fig. 2 dargestellt ist, kann die Ladevorrichtung 22 oder die Lüftungseinrichtung 10 ferner optional eine Schutzeinrichtung 44, beispielsweise in Form eines Lüftungsgitters, aufweisen. Damit kann der Lüfter 12 vor mechanischen Beschädigungen geschützt werden.

Fig. 3 zeigt eine weitere Ausführungsform der Ladevorrichtung 22 mit der Lüftungseinrichtung 10 zum drahtlosen Aufladen eines elektrischen Energiespeichers eines mobilen Endgeräts. Die Ladevorrichtung 22 kann in einem Kraftfahrzeug 46 angeordnet sein. Das Kraftfahrzeug 46 ist dabei lediglich schematisch durch die in Fig. 3 dargestellte gestrichelte Linie veranschaulicht. Weiterhin ist die Ladevorrichtung 22 hierbei schematisch in einem Querschnitt dargestellt.

Die Ladevorrichtung 22 umfasst dabei eine Ladeelektronik 48, welche in einem Gehäuse 30 der Ladevorrichtung 22 angeordnet ist. Die Ladeelektronik 48 kann dabei die üblichen Komponenten, die hier nicht näher dargestellt sind, umfassen, wie eine Spuleneinrichtung, durch welche ein zeitlich variierendes magnetisches Feld bereitstellbar ist, welches während eines Ladevorgangs einen Strom in eine korrespondierende Sekundärspule des mobilen Endgeräts induziert. Des Weiteren weist die Ladevorrichtung 22 eine Steuereinrichtung zum Steuern des Ladevorgangs auf, sowie eine Anschlusseinrichtung zum Anschließen einer Stromversorgung, Wandlereinrichtungen oder andere elektrische und/oder elektronische Komponenten. Bei der Steuereinrichtung kann es sich um die bereits in Zusammenhang mit Fig. 1 beschriebene Steuereinrichtung 14 oder um eine weitere Steuereinrichtung der Ladevorrichtung 22 handeln.

Um die Ladevorrichtung 22 und/oder das Gerät, welches durch die Ladevorrichtung 22 geladen wird, wie das mobile Endgerät, während eines Ladevorgangs vor einer zu starken Erwärmung zu schützen, weist die Ladevorrichtung 22 die Lüftungseinrichtung 10 auf. Zu diesem Zweck weist das Gehäuse 30 eine Lufteintrittsöffnung 32, eine Luftaustrittsöffnung 34 sowie den Lüfter 12 auf. Dieser Lüfter 12 ist dazu ausgelegt, Luft, welche durch die Pfeile 50 veranschaulicht ist, in die Lufteintrittsöffnung 32 einzusaugen, entlang des ersten innerhalb des Gehäuses 30 bereitgestellten Luftförderpfads 52, der sich von der Lufteintrittsöffnung 32 bis zur Luftaustrittsöffnung 34 erstreckt, zu fördern und aus der Luftaustrittsöffnung 34 auszublasen. Der erste Luftförderpfad 52 führt dabei an der Ladeelektronik 48 vorbei. Zusätzlich kann auch die eingesaugte beziehungsweise ausgeblasene Luft 50 zur Kühlung des Geräts genutzt werden, was später näher beschrieben ist.

Besonders vorteilhaft ist hierbei, dass sowohl die Lufteintrittsöffnung 32 als auch die Luftaustrittsöffnung 34 in einer ersten Seite des Gehäuses 30, welche auch eine Oberseite des Gehäuses 30 definiert, und durch welche auch die Auflagefläche 36 zum Auflegen des Geräts 20 zum Zwecke des Ladens bereitgestellt ist, angeordnet sind. Der Lüfter 12 kann an jeder beliebigen Position innerhalb des ersten Luftförderpfads 52 angeordnet werden, insbesondere auch direkt an der Lufteintrittsöffnung 32 oder der Luftaustrittsöffnung 34, sowie an jeder beliebigen Position dazwischen. Besonders vorteilhaft ist dabei eine Position unterhalb der Ladeelektronik 48, da hier in der Regel ausreichend Platz zur Positionierung des Lüfters 12 zur Verfügung steht.

Die Lufteintrittsöffnung 32 und die Luftaustrittsöffnung 34 sind zudem vorzugsweise an gegenüberliegenden Randbereichen R, die die Ladevorrichtung 32 in ihrer Länge L begrenzen, die sich hier in x-Richtung bezüglich des in Fig. 3 dargestellten Koordinatensystems erstreckt, angeordnet. Hierdurch kann also das gesamte Gehäuse 30 mit Kühlluft durchströmt werden, was eine besonders effiziente Kühlung ermöglicht. Üblicherweise verläuft durch die Mittelkonsole auch noch ein Luftkanal 54 zur Luftführung der Luft für die Fondpassagiere des Kraftfahrzeugs 10, welcher hier in Fig. 3 ebenfalls schematisch dargestellt ist.

Insgesamt zeigen die Beispiele, wie durch die Erfindung eine Luftsteuerung für eine Ladevorrichtung, insbesondere für einen Wireless Charger, bereitgestellt wird.

Gemäß einer besonders bevorzugten Ausführungsform erfolgt die Steuerung des Lüfters in Abhängigkeit von einem oder verschiedenen oder mehreren Randparametern. Als Randparameter wird dabei zumindest berücksichtigt, ob ein Ladevorgang aktiv ist, eine Geschwindigkeit des Kraftfahrzeugs, also ein Geschwindigkeitssignal des Kraftfahrzeugs und eine Oberflächentemperatur des Laders oder der Ladevorrichtung.

## Patentansprüche

1. Verfahren zum Betreiben einer Lüftungseinrichtung (10) zum Bereitstellen eines Luftstroms umfassend die Schritte:
- Erfassen eines Ausstattungsparameterwertes eines Ausstattungselements eines Kraftfahrzeugs (46) und eines Fahrzeugparameterwerts des Kraftfahrzeugs (46) und
- Aktivieren der Lüftungseinrichtung (10) in Abhängigkeit von dem erfassten Ausstattungsparameterwert und dem erfassten Fahrzeugparameterwert, wobei zum Aktivieren der Lüftungseinrichtung (10) eine Drehzahl eines Lüfters (10) der Lüftungseinrichtung (10) eingestellt wird, wobei die Drehzahl in Abhängigkeit von dem erfassten Ausstattungsparameterwert und dem erfassten Fahrzeugparameterwert variiert wird, wobei der Fahrzeugparameterwert eine Geschwindigkeit des Kraftfahrzeugs (46) umfasst, welche als Fahrzeugparameter erfasst wird,
**dadurch gekennzeichnet, dass**
- als Ausstattungsparameterwert ein Geräteparameterwert einer mit der Lüftungseinrichtung (10) zu belüftenden Geräteeinrichtung, welche eine Ladevorrichtung, welche dazu eingerichtet ist, ein mobiles Endgerät der Geräteeinrichtung zu laden, und/oder das mobile Endgerät umfasst, wobei
- als der Geräteparameterwert eine Temperatur und ein Status der Geräteeinrichtung, welcher einen Status eines Ladevorgangs der Ladevorrichtung und/oder des mobilen Endgeräts umfasst, erfasst wird.

2. Verfahren nach Anspruch 1,
**dadurch gekennzeichnet, dass**
als der Geräteparameterwert die Temperatur an einer Geräteoberfläche der Ladevorrichtung und/oder des mobilen Endgeräts (20; 22) der Geräteeinrichtung und/oder ein Status einer Ladebereitschaft der Ladevorrichtung und/oder des mobilen Endgeräts (20; 22) erfasst wird.

3. Verfahren nach Anspruch 1 oder 2,
**dadurch gekennzeichnet, dass**
die Lüftungseinrichtung (10) bei einer Temperatur von über 30°C, besonders bevorzugt bei einer Temperatur von über 40°C, und/oder wenn als Status ein Ladevorgang der Geräteeinrichtung erfasst wird, aktiviert wird.

4. Verfahren nach einem der vorhergehenden Ansprüche,
**dadurch gekennzeichnet, dass**
der Fahrzeugparameterwert einen Innenraumparameterwert in einem Innenraum (18) des Kraftfahrzeugs (46) umfasst, wobei als Innenraumparameterwert eine Innenraumtemperatur und/oder ein Geräuschpegel erfasst wird.

5. Verfahren nach einem der vorhergehenden Ansprüche,
**dadurch gekennzeichnet, dass**
die Lüftungseinrichtung (10) ab einer Geschwindigkeit des Kraftfahrzeugs (46) von 5 km/h, insbesondere bei einer Geschwindigkeit zwischen 5 km/h und 30 km/h, besonders bevorzugt ab einer Geschwindigkeit von 30 km/h, aktiviert wird.

6. Verfahren nach einem der vorhergehenden Ansprüche,
**dadurch gekennzeichnet, dass**
in Abhängigkeit von zumindest dem erfassten Ausstattungsparameterwert und dem Fahrzeugparameterwert, die Drehzahl des Lüfters (12) der Lüftungseinrichtung (10) zwischen 10 %und 100 %, insbesondere zwischen 30 %und 100 %, besonders bevorzugt mit 30 % oder 60 % oder 100 %, eingestellt wird.

7. Verfahren nach einem der vorhergehenden Ansprüche,
**dadurch gekennzeichnet, dass**
zusätzlich zu dem Ausstattungsparameterwert und dem Fahrzeugparameterwert eine Einstellung einer Klimaanlage (24) des Kraftfahrzeugs (46) erfasst wird, wobei die Drehzahl des Lüfters (12) in Abhängigkeit von dem erfassten Ausstattungsparameterwert, dem erfassten Fahrzeugparameterwert und der erfassten Einstellung der Klimaanlage (24) variiert wird.

8. Lüftungseinrichtung (10) zum Bereitstellen eines Luftstroms umfassend:
- einen Lüfter (12), welcher dazu eingerichtet ist, einen Luftstrom zu erzeugen,
- eine Erfassungseinrichtung (16), welche dazu eingerichtet ist, einen Ausstattungsparameterwert eines Ausstattungselements eines Kraftfahrzeugs (46) und einen Fahrzeugparameterwert des Kraftfahrzeugs (46) zu erfassen und
- eine Steuereinrichtung (14), welche dazu eingerichtet ist, die Lüftungseinrichtung (10) in Abhängigkeit von dem erfassten Ausstattungsparameterwert und dem erfassten Fahrzeugparameterwert zu aktivieren, wobei
- die Steuereinrichtung (14) ferner dazu eingerichtet ist, zum Aktivieren der Lüftungseinrichtung (10) eine Drehzahl des Lüfters (12) einzustellen, wobei die Steuereinrichtung (14) die Drehzahl in Abhängigkeit von dem erfassten Ausstattungsparameterwert und dem erfassten Fahrzeugparameterwert variiert, wobei
- der Fahrzeugparameterwert eine Geschwindigkeit des Kraftfahrzeugs (46) umfasst, wobei die Erfassungseinrichtung (16) dazu eingerichtet ist, diese als Fahrzeugparameter zu erfassen,
**dadurch gekennzeichnet, dass**
- die Erfassungseinrichtung (16) dazu eingerichtet ist, als Ausstattungsparameterwert einen Geräteparameterwert einer mit der Lüftungseinrichtung (10) zu belüftenden Geräteeinrichtung, welche eine Ladevorrichtung, welche dazu eingerichtet ist, ein mobiles Endgerät der Geräteeinrichtung zu laden, und/oder das mobile Endgerät umfasst, zu erfassen, wobei
- die Erfassungseinrichtung (16) dazu eingerichtet ist, als den Geräteparameterwert eine Temperatur und einen Status der Geräteeinrichtung, welcher einen Status eines Ladevorgangs der Ladevorrichtung und/oder des mobilen Endgeräts umfasst, zu erfassen.

9. Ladevorrichtung (22) zum drahtlosen Aufladen eines wiederaufladbaren elektrischen Energiespeichers eines Geräts (20) mit einer Lüftungseinrichtung (10) nach Anspruch 8.

10. Kraftfahrzeug (46) mit einer Ladevorrichtung (22) nach Anspruch 9.

## Claims

1. Method for operating a ventilation device (10) for providing an air flow comprising the steps:
- detecting an equipment parameter value of an equipment element of a motor vehicle (46) and a vehicle parameter value of the motor vehicle (46) and
- activating the ventilation device (10) as a function of the detected equipment parameter value and the detected vehicle parameter value, wherein for activating the ventilation device (10) a speed of a fan (10) of the ventilation device (10) is set, wherein the speed is varied as a function of the detected equipment parameter value and the detected vehicle parameter value, wherein the vehicle parameter value comprises a speed of the motor vehicle (46) which is detected as vehicle parameter,
**characterised in that**
- as equipment parameter value a device parameter value of a device to be ventilated by the ventilation device (10), which comprises a charging device, which is configured to charge a mobile terminal of the device, and/or the mobile terminal, wherein
- as the device parameter value a temperature and a status of the device is detected, which comprises a status of a charging process of the charging device and/or the mobile terminal.

2. Device according to claim 1,
**characterised in that**
as the device parameter value the temperature is detected on a device surface of the charging device and/or the mobile terminal (20; 22) of the device and/or a status of a charging readiness of a the charging device and/or the mobile terminal (20; 22).

3. Method according to claim 1 or 2,
**characterised in that**
the ventilation device (10) is activated at a temperature of above 30°C, particularly preferably at a temperature of above 40°C, and/or if as status a charging process of the device is detected.

4. Method according to any of the preceding claims,
**characterised in that**
the vehicle parameter value comprises an interior parameter value in an interior (18) of the motor vehicle (46), wherein as interior parameter value an interior temperature and/or a noise level is detected.

5. Method according to any of the preceding claims,
**characterised in that**
the ventilation device (10) is activated from a speed of the motor vehicle (46) of 5 km/h, in particular at a speed between 5 km/h and 30 km/h, particularly preferably from a speed of 30 km/h.

6. Method according to any of the preceding claims,
**characterised in that**
as a function of at least the detected equipment parameter value and the vehicle parameter value, the speed of the fan (12) of the ventilation device (10) is set to be between 10% and 100%, in particular between 30% and 100 %, particularly preferably at 30% or 60% or 100%.

7. Method according to any of the preceding claims,
**characterised in that**
in addition to the equipment parameter value and the vehicle parameter value a setting of an air conditioning system (24) of the motor vehicle (46) is detected, wherein the speed of the fan (12) is varied as a function of the detected equipment parameter value, the detected vehicle parameter value and the detected setting of the air conditioning system (24).

8. Ventilation device (10) for providing an air flow comprising:
- a fan (12), which is configured to generate an air flow,
- a detection device (16), which is configured to detect an equipment parameter value of an equipment element of a motor vehicle (46) and a vehicle parameter value of the motor vehicle (46) and
- a control device (14), which is configured to activate the ventilation device (10) as a function of the detected equipment parameter value and the detected vehicle parameter value, wherein
- the control device (14) is also configured to adjust a speed of the ventilator (12) to activate the ventilation device (10), wherein the control device (14) varies the speed as a function of the detected equipment parameter value and the detected vehicle parameter value, wherein
- the vehicle parameter value comprises a speed of the motor vehicle (46), wherein the detection device (16) is configured to detect the latter as vehicle parameter, **characterised in that**
- the detection device (16) is configured as equipment parameter value to detect a device parameter value of a device to be ventilated by the ventilation device (10), which comprises a charging device, which is configured to charge a mobile terminal of the device, and/or the mobile terminal, wherein
- the detection device (16) is configured to detect as the device parameter value a temperature and a status of the device which comprises a status of a charging process of the charging device and/or the mobile terminal.

9. Charging device (22) for wireless charging of a rechargeable electric energy storage system of a device (20) with a ventilation device (10) according to claim 8.

10. Motor vehicle (46) with a charging device (22) according to claim 9.

## Revendications

1. Procédé de fonctionnement d'un dispositif de ventilation (10) pour la mise à disposition d'un flux d'air comprenant les étapes de :
- détection d'une valeur de paramètre d'équipement d'un élément d'équipement d'un véhicule automobile (46) et d'une valeur de paramètre de véhicule du véhicule automobile (46) et
- activation du dispositif de ventilation (10) en fonction de la valeur de paramètre d'équipement détectée et de la valeur de paramètre de véhicule détectée, dans lequel une vitesse de rotation d'un ventilateur (10) du dispositif de ventilation (10) est réglée pour l'activation du dispositif de ventilation (10), dans lequel la vitesse de rotation varie en fonction de la valeur de paramètre d'équipement détectée et de la valeur de paramètre de véhicule détectée, dans lequel la valeur de paramètre de véhicule comprend une vitesse du véhicule automobile (46), laquelle est détectée en tant que paramètre de véhicule,
**caractérisé en ce que**
- une valeur de paramètre d'appareil d'un dispositif d'appareil à ventiler avec le dispositif de ventilation (10), lequel comprend un dispositif de recharge, lequel est aménagé pour recharger un terminal mobile du dispositif d'appareil, et/ou le terminal mobile est détectée en tant que valeur de paramètre d'équipement, dans lequel
- une température et un état du dispositif d'appareil, lequel comprend un état d'une opération de recharge du dispositif de recharge et/ou du terminal mobile, sont détectés en tant que valeur de paramètre d'appareil.

2. Procédé selon la revendication 1,
**caractérisé en ce que**
la température est détectée en tant que valeur de paramètre d'appareil au niveau d'une surface d'appareil du dispositif de recharge et/ou du terminal mobile (20 ; 22) du dispositif d'appareil et/ou un état d'une disponibilité de recharge du dispositif de recharge et/ou du terminal mobile (20; 22).

3. Procédé selon la revendication 1 ou 2,
**caractérisé en ce que**
le dispositif de ventilation (10) est activé à une température supérieure à 30 °C, le plus préférentiellement à une température supérieure à 40 °C, et/ou lorsqu'une opération de recharge du dispositif d'appareil est détectée en tant qu'état.

4. Procédé selon l'une quelconque des revendications précédentes,
**caractérisé en ce que**
la valeur de paramètre de véhicule comprend une valeur de paramètre d'habitacle dans un habitacle (18) du véhicule automobile (46), dans lequel une température d'habitacle et/ou un niveau sonore est détecté en tant que valeur de paramètre de véhicule.

5. Procédé selon l'une quelconque des revendications précédentes,
**caractérisé en ce que**
le dispositif de ventilation (10) est activé à partir d'une vitesse du véhicule automobile (46) de 5 km/h, en particulier à une vitesse entre 5 km/h et 30 km/h, le plus préférentiellement à partir d'une vitesse de 30 km/h.

6. Procédé selon l'une quelconque des revendications précédentes,
**caractérisé en ce que**
la vitesse de rotation du ventilateur (12) du dispositif de ventilation (10) est réglée entre 10 % et 100 %, en particulier entre 30 % et 100 %, le plus préférentiellement à 30 % ou 60 % ou 100 % en fonction d'au moins la valeur de paramètre d'équipement détectée et la valeur de paramètre de véhicule.

7. Procédé selon l'une quelconque des revendications précédentes,
**caractérisé en ce que**
en plus de la valeur de paramètre d'équipement et de la valeur de paramètre de véhicule, un réglage d'une climatisation (24) du véhicule automobile (46) est détecté, dans lequel la vitesse de rotation du ventilateur (12) varie en fonction de la valeur de paramètre d'équipement détectée, de la valeur de paramètre de véhicule détectée et du réglage détecté de la climatisation (24).

8. Dispositif de ventilation (10) pour la mise à disposition d'un flux d'air comprenant :
- un ventilateur (12), lequel est aménagé pour générer un flux d'air,
- un dispositif de détection (16), lequel est aménagé pour détecter une valeur de paramètre d'équipement d'un élément d'équipement d'un véhicule automobile (46) et une valeur de paramètre de véhicule du véhicule automobile (46) et
- un dispositif de commande (14), lequel est aménagé pour activer le dispositif de ventilation (10) en fonction de la valeur de paramètre d'équipement détectée et de la valeur de paramètre de véhicule détectée, dans lequel
- le dispositif de commande (14) est aménagé en outre pour régler une vitesse de rotation du ventilateur (12) pour l'activation du dispositif de ventilation (10), dans lequel le dispositif de commande (14) fait varier la vitesse de rotation en fonction de la valeur de paramètre d'équipement détectée et de la valeur de paramètre de véhicule détectée, dans lequel
- la valeur de paramètre de véhicule comprend une vitesse du véhicule automobile (46), dans lequel le dispositif de détection (16) est aménagé pour détecter celui-ci en tant que paramètre de véhicule,
**caractérisé en ce que**
- le dispositif de détection (16) est aménagé pour détecter en tant que valeur de paramètre d'équipement une valeur de paramètre d'appareil d'un dispositif d'appareil à ventiler avec le dispositif de ventilation (10), lequel comprend un dispositif de recharge, lequel est aménagé pour recharger un terminal mobile du dispositif d'appareil, et/ou le terminal mobile, dans lequel
- le dispositif de détection (16) est aménagé pour détecter en tant que valeur de paramètre d'appareil une température et un état du dispositif d'appareil, lequel comprend un état d'une opération de recharge du dispositif de recharge et/ou du terminal mobile.

9. Dispositif de recharge (22) pour la recharge sans fil d'un accumulateur d'énergie électrique rechargeable d'un appareil (20) avec un dispositif de ventilation (10) selon la revendication 8.

10. Véhicule automobile (46) avec un dispositif de recharge (22) selon la revendication 9.
